(19) Europäisches Patentamt
European Patent Office
Office européen des brevets

(11) EP 3 856 517 B1

(12) EUROPEAN PATENT SPECIFICATION

(45) Date of publication and mention
of the grant of the patent:
**22.01.2025 Bulletin 2025/04**

(21) Application number: **19768795.7**

(22) Date of filing: **12.09.2019**

(51) International Patent Classification (IPC):
**B32B 27/08** (2006.01)    **B32B 27/32** (2006.01)
**C08J 5/18** (2006.01)

(52) Cooperative Patent Classification (CPC):
**C08J 5/18; B32B 27/08; B32B 27/327;**
B32B 2250/02; B32B 2250/04; B32B 2250/05;
B32B 2307/31; B32B 2307/732; B32B 2307/748;
B32B 2439/40; B32B 2439/70; C08J 2323/08

(86) International application number:
**PCT/EP2019/074337**

(87) International publication number:
**WO 2020/064349 (02.04.2020 Gazette 2020/14)**

(54) **POLYETHYLENE FILM FOR HEAT SEALING**

POLYETHYLENFOLIE ZUM HEISSSIEGELN

FILM DE POLYÉTHYLÈNE DESTINÉ AU THERMOSCELLAGE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **25.09.2018 EP 18196450**

(43) Date of publication of application:
**04.08.2021 Bulletin 2021/31**

(73) Proprietor: **SABIC Global Technologies B.V.**
**4612 PX Bergen op Zoom (NL)**

(72) Inventors:
• **GARG, Priya**
**6160 GA Geleen (NL)**
• **SOLIMAN, Maria**
**6160 GA Geleen (NL)**
• **TACX, Jacobus Christinus Josephus Franciscus**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**US-A- 5 874 139    US-A1- 2007 093 603**

• **ABDULAAL Z. AL-KHAZAAL ET AL:
"Characterization of Ethylene/[alpha]-Olefin
Copolymers Using High-Temperature Thermal
Gradient Interaction Chromatography",
MACROMOLECULAR CHEMISTRY AND
PHYSICS., vol. 215, no. 5, 4 February 2014
(2014-02-04), DE, pages 465 - 475, XP055568238,
ISSN: 1022-1352, DOI: 10.1002/macp.201300736**
• **S. AL-MALAIKA ET AL: "Metallocene ethylene-1-
octene copolymers: Influence of comonomer
content on thermo-mechanical, rheological, and
thermo-oxidative behaviours before and after
melt processing in an internal mixer", POLYMER
DEGRADATION AND STABILITY, vol. 91, no. 12, 1
December 2006 (2006-12-01), GB, pages 3131 -
3148, XP055568445, ISSN: 0141-3910, DOI:
10.1016/j.polymdegradstab.2006.07.020**

**Description**

The present invention relates to a polyethylene film for heat sealing, and to multilayer structures comprising such film. The invention also relates to articles comprising such films, and to a process for the production of a sealed article comprising such films.

Films comprising or consisting of polyethylene materials are abundantly used in a wide variety of applications. A particular example where such polyethylene films find their application is in food packaging. Use of polyethylenes allows for packaging of foodstuff products in a very hygienic manner, contributes to preservation of the packaged products for a prolonged period, and can be done in a very economically attractive way. Further, polyethylene films can be produced with a highly attractive appearance.

Polyethylene materials that are suitable for the production of films include low-density polyethylenes, also referred to as LOPE, high-density polyethylenes, also referred to as HDPE, and linear low-density polyethylenes, also referred to as LLDPE. Particularly suitable for many film applications are linear low-density polyethylenes.

Linear low-density polyethylenes may for example be polyethylenes comprising moieties derived from ethylene and moieties derived from an $\alpha$-olefin comprising 4 to 10 carbon atoms, having a density of $\geq 870$ and $\leq 920$ kg/m$^3$ as determined in accordance ASTM D792 (2013). Preferably, the polyethylene has a density of $\geq 880$ and $\leq 915$ kg/m$^3$, more preferably of $\geq 890$ and $\leq 910$ kg/m$^3$.

The LLDPE may for example have a melt mass-flow rate, determined at 190°C under a load of 2.16 kg (MFR2), in accordance with ASTM D1238 (2013), of $\geq 0.01$ and $\leq 10.00$ g/10 min, preferably $\geq 0.10$ and $\leq 5.00$ g/10 min, more preferably $\geq 0.50$ and $\leq 2.50$ g/10 min. Such LLDPE allows for manufacturing of films with appropriate melt stability and processability.

In the field of application of polyethylene films for packaging, a particular aspect relates to the sealing of such packages.

In commercial use, polyethylene films may for example be used in packaging of products, such as foodstuffs, wherein the package is filled with the desired product and sealed by contacting two layers of film, such as a tubular film obtained by blown film extrusion, and application of heat to at least a portion of the area where the films are contacting each other. The applied heat results in a local softening of the polyethylene material of both the layers that are brought into contact with each other. This leads to adhesion between the two layers, and, upon cooling, to a closed seal, thus forming a package that contains the desired contents separated from the surrounding atmosphere.

Such packages are well known in everyday applications, and allow for example a significant increase in retention of the contained products.

In such packaging solutions, the seals that are produced using such heat-sealing technology as described above need to have a certain strength. This is required in order to be able to produce a package that, during production, transport and consumer use, is able to withstand certain forces it should be considered able to withstand. Therefore, the strength of the seal should be above a certain threshold.

Polyethylene films for heat sealing applications are known from US 2007/093603 A1 and US 5 874 139 A.

What is further important, in view of the process efficiency of the packaging process as well as the energy consumption during the packaging process, is that such seal having a desirably high strength may be produced at a sealing temperature that is desirably low. The lower the temperature at which the seal is formed, the less energy is to be employed. A further benefit of a lower temperature that is required for seal formation is that the contents of the package are to a lesser degree subjected to certain elevated temperatures, which, for example in the case of packaging of foodstuffs, may be beneficial for the retention of the quality of the packaged contents.

A further important property in such packaging solutions based on polyethylene materials is the so-called hot tack strength. In the context of the present invention, the hot tack strength is to be understood as the strength of a seal made in a film of the polyethylene by heat-sealing immediately after the sealing, before the seal has cooled down. The hot tack strength affects the efficiency of the packaging process in which the polyethylene film material is employed, for example the speed at which the packaging lines may be operated. The higher the hot tack strength, the less cooling time is required upon seal formation prior to further processing of the package, i.e. the earlier the strength of the seal is of such magnitude as to be able to withstand exerted forces without damaging the seal, the shorter the cycle time in for example continuous packaging machines.

For these reasons, there is an ongoing desire in the packaging industry to have access to polyethylene films that demonstrate a reduction of the temperature at which a seal of certain defined strength can be produced, where the hot-tack strength of that seal is particularly high.

Such films are now provided according to the present invention by a film comprising at least one sealing layer wherein at least one layer A of the sealing layer(s) comprises a polyethylene comprising moieties derived from ethylene and moieties derived from an $\alpha$-olefin comprising 4 to 10 carbon atoms, the polyethylene having a density of $\geq 870$ and $\leq 920$ kg/m$^3$ as determined in accordance with ASTM D792 (2013),

wherein the polyethylene has:

- a fraction of material that is eluted in analytical temperature rising elution fractionation (a-TREF) at a temperature $\leq 30.0°C$ of $\geq 5.0$ wt%, preferably $\geq 10.0$ wt%, with regard to the total weight of the polyethylene;
- a shear storage modulus G' determined at a shear loss modulus G" = 5000 Pa of > 1000 Pa, G' and G" being determined in accordance with ISO 6721-10 (2015) at 190°C; and
- a chemical composition distribution broadness (CCDB) of $\geq 15.0$ and $\leq 30.0$, preferably $\geq 20.0$ and $\leq 30.0$,

wherein the CCDB is determined according to formula I:

$$CCDB = \frac{T_{z+2} - T_{n-2}}{T_{n-2}} * 100$$

formula I

wherein

- $T_{n-2}$ is the moment calculated according to the formula II:

$$T_{n-2} = \frac{\sum \frac{w(i)}{T(i)^2}}{\sum \frac{w(i)}{T(i)^3}}$$

formula II

and
- $T_{z+2}$ is the moment calculated according to the formula III:

$$T_{z+2} = \frac{\sum w(i) \cdot T(i)^4}{\sum w(i) \cdot T(i)^3}$$

formula III

wherein

- w(i) is the sampled weight fraction in wt% with regard to the total sample weight in a-TREF analysis of a sample (i) taken at temperature T(i), where T(i) > 30°C, the area under the a-TREF curve being normalised to surface area = 1 for T(i) > 30°C; and
- T(i) is the temperature at which sample (i) is taken in a-TREF analysis, in °C;

wherein the layer A comprises > 50.0 wt% of the polyethylene, with regard to the total weight of the layer A.

Such film allows for sealing of the film at a reduced temperature, whilst still providing a desirable seal strength, and a desirable hot-tack strength.

The polyethylene that is employed in the layer A of the film according to the present invention has a density of $\geq$ 870 and $\leq 920$ kg/m$^3$, preferably of $\geq 880$ and $\leq 915$ kg/m$^3$, more preferably of $\geq 890$ and $\leq 910$ kg/m$^3$, even more preferably of $\geq 895$ and $\leq 905$ kg/m$^3$, or of $\geq 900$ and $\leq 920$ kg/m$^3$, such as of $\geq 900$ and $\leq 915$ kg/m$^3$, or of $\geq 900$ and $\leq 910$ kg/m$^3$, or of $\geq 900$ and $\leq 905$ kg/m$^3$. The use of a polyethylene having such density in the layer A of the film according to the invention contributes to improved sealing.

The polyethylene that is employed in the layer A of the film according to the present invention has a fraction of material that is eluted in a-TREF at a temperature of $\leq 30.0°C$ of $\geq 5.0$ wt% with regard to the total weight of the polyethylene, preferably $\geq 7.5$ wt%, more preferably $\geq 10.0$ wt%, even more preferably $\geq 11.5$ wt%. Preferably, polyethylene that is employed in the layer A of the film according to the present invention has a fraction of material that is eluted in a-TREF at a temperature of $\leq 30.0°C$ of $\geq 5.0$ wt% and $\leq 25.0$ wt%, more preferably $\geq 7.5$ wt% and $\leq 20.0$ wt%, even more preferably $\geq 10.0$ wt% and $\leq 20.0$ wt%, even more preferably $\geq 11.0$ wt% and $\leq 15.0$ wt%, with regard to the total weight of the polyethylene. The use of a polyethylene having such a fraction of material that is eluted in a-TREF at a temperature of $\leq 30.0°C$ in the layer A of the film according to the invention contributes to a reduction of the seal initiation temperature.

The polyethylene that is employed in the layer A of the film according to the present invention has a shear storage modulus G' determined at a shear loss modulus G" = 5000 Pa of > 1000 Pa, preferably > 1100 Pa, more preferably > 1200 Pa, even more preferably > 1300 Pa. The use of a polyethylene having such shear storage modulus G' at a shear loss modulus of 5000 Pa in the layer A of the film according to the invention contributes to improved processability of the film.

According to the invention, analytical temperature rising elution fractionation, also referred to as a-TREF, may be carried out using a Polymer Char Crystaf-TREF 300 equipped with stainless steel columns having a length of 15 cm and an internal diameter of 7.8 mm, with a solution containing 4 mg/ml of sample prepared in 1,2-dichlorobenzene stabilised with 1 g/l Topanol CA (1,1,3-tri(3-tert-butyl-4-hydroxy-6-methylphenyl)butane) and 1 g/l Irgafos 168 (tri(2,4-di-tert-butylphenyl) phosphite) at a temperature of 150°C for 1 hour. The solution may be further stabilised for 45 minutes at 95°C under continuous stirring at 200 rpm before analyses. For analyses, the solution was crystallised from 95°C to 30°C using a cooling rate of 0.1°C/min. Elution may be performed with a heating rate of 1°C/min from 30°C to 140°C. The set-up may be cleaned at 150°C. The sample injection volume may be 300 $\mu$l, and the pump flow rate during elution 0.5 ml/min. The volume between the column and the detector may be 313 $\mu$l. The fraction that is eluted at a temperature of $\leq$30.0°C may in the context of the present invention be calculated by subtracting the sum of the fraction eluted >30.0°C from 100%, thus the total of the fraction eluted $\leq$ 30.0°C, and the fraction eluted >30.0°C to add up to 100.0 wt%.

Particularly, a-TREF may be carried out using a Polymer Char Crystaf-TREF 300 using a solution containing 4 mg/ml of the polymer in 1,2-dichlorobenzene, wherein the solution is stabilised with 1 g/l 1,1,3-tri(3-tert-butyl-4-hydroxy-6-methylphenyl)butane and 1 g/l tri(2,4-di-tert-butylphenyl) phosphite) at a temperature of 150°C for 1 hour, and further stabilised for 45 minutes at 95°C under continuous stirring at 200 rpm, wherein the prior to analyses the solution is crystallised from 95°C to 30°C using a cooling rate of 0.1°C/min, and elution is performed at a heating rate of 1°C/min from 30°C to 140°C, and wherein the equipment has been cleaned at 150°C.

For determination of the shear storage modulus G' and the shear loss modulus G", specimens may be used as prepared in accordance with ISO 17855-2 (2016). The DMS measurements were carried out according to ISO 6721-10 (2015) at 190°C. Determination of G' at G" = 5000 Pa may be done by preparation of a double-logarithmic Cole-Cole plot of G' and G", where above and below G"= 5000 Pa, each 2 data points are to be selected, so in total 4 data points, and a first order line may be determined, where from this line G' at G" = 5000 Pa is determined.

The polyethylene that is employed in the layer A of the film according to the present invention has a CCDB of $\geq$ 15.0 and $\leq$ 30.0, preferably $\geq$ 17.5 and $\leq$ 25.0, more preferably $\geq$ 20.0 and $\leq$ 25.0, or $\geq$ 20.0 and $\leq$ 30.0. The use of a polyethylene having such CCDB in the layer A of the film according to the invention contributes to an improved seal strength.

The polyethylene that is employed in the layer A of the film according to the present invention has a a melt mass-flow rate, determined at 190°C under a load of 2.16 kg (MFR2), in accordance with ASTM D1238 (2013), of $\geq$ 0.01 and $\leq$ 10.00 g/10 min, preferably $\geq$ 0.10 and $\leq$ 5.00 g/10 min, more preferably $\geq$ 0.50 and $\leq$ 2.50 g/10 min. Such LLDPE allows for manufacturing of films with appropriate melt stability and processability.

It is preferred that the polyethylene comprises $\geq$ 70.0 wt% of moieties derived from ethylene, with regard to the total weight of the polyethylene, preferably $\geq$ 75.0 wt%, more preferably $\geq$ 80.0 wt%. Preferably, the polyethylene comprises $\geq$ 70.0 and $\leq$ 98.0 wt%, more preferably $\geq$ 75.0 and $\leq$ 95.0 wt%, even more preferably $\geq$ 80.0 and $\leq$ 90.0 wt% of moieties derived from ethylene, with regard to the total weight of the polyethylene.

It is further preferred that the polyethylene comprises $\leq$ 30.0 wt% of moieties derived from an $\alpha$-olefin comprising 4-10 carbon atoms, with regard to the total weight of the polyethylene, preferably $\leq$ 25.0 wt%, more preferably $\leq$ 20.0 wt%. The polyethylene may for example comprise $\geq$ 5.0 wt% of moieties derived from an $\alpha$-olefin comprising 4-10 carbon atoms, with regard to the total weight of the polyethylene, preferably $\geq$ 10.0 wt%, more preferably $\geq$ 15.0 wt%. For example, the polyethylene may comprise $\geq$ 5.0 and $\leq$ 30.0 wt% of moieties derived from an $\alpha$-olefin comprising 4-10 carbon atoms, with regard to the total weight of the polyethylene, preferably $\geq$ 10.0 wt% and $\leq$ 25.0 wt%, more preferably $\geq$ 15.0 and $\leq$ 20.0 wt%.

The $\alpha$-olefin may comprising 4-10 carbon atoms for example be selected from 1-butene, 1-hexene, 4-methyl-1-pentene, and 1-octene, such as from 1-butene, 1-hexene and 1-octene. For example, the $\alpha$-olefin comprising 4-10 carbon atoms may be selected from 1-hexene and 1-octene. The moieties derived from an $\alpha$-olefin comprising 4-10 carbon atoms may for example be moieties derived from 1-butene, 1-hexene, 4-methyl-1-pentene, 1-octene, or combinations thereof, preferably from 1-hexene or 1-octene.

The polyethylene that is employed in the layer A of the film according to the present invention may for example comprise $\leq$ 30.0 wt% of moieties derived from an $\alpha$-olefin comprising 4-10 carbon atoms, with regard to the total weight of the polyethylene, preferably $\leq$ 25.0 wt%, more preferably $\leq$ 20.0 wt%, wherein the $\alpha$-olefin comprising 4-10 carbon atoms is selected from 1-butene, 1-hexene, 4-methyl-1-pentene, and 1-octene, such as from 1-butene, 1-hexene and 1-octene. The polyethylene may for example comprise $\geq$ 5.0 wt% of moieties derived from an $\alpha$-olefin comprising 4-10 carbon atoms, with regard to the total weight of the polyethylene, preferably $\geq$ 10.0 wt%, more preferably $\geq$ 15.0 wt%, wherein the $\alpha$-olefin comprising 4-10 carbon atoms is selected from 1-butene, 1-hexene, 4-methyl-1-pentene, and 1-octene, such as from 1-butene, 1-hexene and 1-octene. For example, the polyethylene may comprise $\geq$ 5.0 and $\leq$ 30.0 wt% of moieties derived from an $\alpha$-olefin comprising 4-10 carbon atoms, with regard to the total weight of the polyethylene, preferably $\geq$ 10.0 wt%

and ≤ 25.0 wt%, more preferably ≥ 15.0 and ≤ 20.0 wt%, wherein the α-olefin comprising 4-10 carbon atoms is selected from 1-butene, 1-hexene, 4-methyl-1-pentene, and 1-octene, such as from 1-butene, 1-hexene and 1-octene.

The layer A of the film according to the present invention comprises > 50.0 wt%, or > 60.0 wt%, or > 70.0 wt%, or > 80.0 wt%, or > 90.0 wt%, of the polyethylene, with regard to the total weight of the film. Alternatively, the film consists of or essentially consists of the polyethylene.

In the context of the present invention, the embodiment wherein the layer A of the film essentially consists of the polyethylene is to be understood as wherein the layer A of the film consists of the polyethylene and additives known in the art of polyethylene films, such as up to 1.0 wt% of additives, with regard to the total weight of the film. Suitable additives may for example include UV stabilisers, antioxidants, and processing aids.

The layer A of the film according to the present invention may for example comprise < 90.0 wt%, or < 80.0 wt%, or < 70.0 wt%, or < 60.0 wt%, of the polyethylene, with regard to the total weight of the film. The layer A of the film may comprise for example > 60.0 wt% and < 90.0 wt%, or > 70.0 and < 90.0 wt% of the polyethylene.

The layer A may for example have a thickness of 1-100 μm, preferably 5-75 μm, more preferably 10-50 μm, more preferably 20-40 μm.

In one of its embodiments, the film consists of the layer A.

The polyethylene may for example be produced via a solution polymerisation process, preferably by polymerisation of ethylene with 1-hexene and/or 1-octene. The polyethylene may for example be produced using a metallocene-type catalyst, preferably by polymerisation of ethylene with 1-hexene and/or 1-octene.

In certain of its embodiments, the present invention also relates to certain multilayer film structures comprising a film according to the present invention. For example, the invention also relates to a multilayer film structure comprising a film according to the present invention, wherein the film is positioned such in the arrangement of the multilayer film structure that at least one of the outer surfaces of the multilayer film structure is constituted by a layer A. Alternatively, the invention also relates to a multilayer film structure comprising a film according to the present invention, wherein the film is positioned such in the arrangement of the multilayer film structure that both the outer surfaces of the multilayer film structure are constituted by a layer A.

In a further embodiment, the invention relates to a multilayer film structure comprising two outer layers and at least one inner layer positioned between the two outer layers, wherein one of the outer layers is constituted by a layer A, or wherein both outer layers are each constituted by a layer A.

The multilayer film structure may for example comprises 3-15 layers, preferably 3-11 layers, more preferably 3-7 layers. The multilayer film structure may for example comprise 3 layers, or 5 layers, or 7 layers.

The multilayer film structure may for example have a thickness of 2-150 μm, preferably 20-100μm, more preferably 25-75 μm.

In a particular embodiment, the invention also relates to a process for preparing an article comprising a sealed film, the process comprising the steps in this order of:

- providing a film or a multilayer film structure according to the invention;
- providing an object comprising a surface for sealing with the film or the multilayer film structure;
- arranging the film or multilayer film structure and the object so that a layer A of the film or the multilayer film structure and the surface for sealing of the object can be brought into contact with each other;
- contacting the film and the surface for sealing at a temperature of ≥ 60 and ≤ 80 °C, during a time of 1-5 seconds, under application of a pressure of ≥ 0.3 N/mm$^2$ to obtain a heat-sealed article.

The invention also relates to an article comprising a film sealed to a surface, wherein the article comprises a film or a multilayer film structure according to the invention, or wherein the article is produced according to the process according to the invention. For example, such article may be a package for containing foodstuffs, or a package containing foodstuffs.

The invention will now be illustrated by the following non-limiting examples.

In the experiments conducted in the course of the present invention, the following polyethylene materials were used.

| PE1 | Cohere 8102, an ethylene-octene copolymer comprising 16.5 wt% 1-octene, obtainable from SABIC |
| PE2 | Affinity PL1880G, an ethylene-octene copolymer comprising 16.1 wt% 1-octene, obtainable from Dow |
| PE3 | Evolue SP0510, an ethylene-hexene copolymer comprising 14.9 wt% 1-hexene, obtainable from Mitsui |
| PE4 | Cohere S100, an ethylene-octene copolymer comprising 19.8 wt% 1-octene, obtainable from SABIC |

These materials were analysed to demonstrate the following product properties:

|  | PE1 | PE2 | PE3 | PE4 |
|---|---|---|---|---|
| MFR2 (g/10 min) | 1.1 | 1.0 | 1.0 | 1.0 |
| Density (kg/m³) | 902 | 902 | 904 | 900 |
| G' at G" = 5000 Pa (Pa) | 1604 | 1833 | 487 | 1372 |
| Fraction a-TREF <30°C (wt%) | 2.9 | 3.9 | 9.7 | 10.8 |
| CCDB (-) | 17.3 | 19.1 | 26.4 | 20.8 |

Using these materials, films were produced via blown film extrusion, using a single-screw extruder having a screw diameter of 55 mm, using annular die having a diameter of 180 mm and a die gap of 1.8 mm. Films were produced at a die temperature of 160 °C, with blow-up ratio of 2.1, and a draw down ratio of 21.4. The films had a thickness of 40 μm.

The films produced as per the above process using each of PE 1 through 4 were subjected to analysis and testing, as described below.

| Film | F1 | F2 | F3 | F4 |
|---|---|---|---|---|
| Polyethylene type | PE1 | PE2 | PE3 | PE4 |
| Hot-tack strength @60°C | 0.163 | 0.185 | 0.658 | 1.157 |
| Hot-tack strength @70°C | 0.815 | 0.450 | 1.755 | 1.802 |
| Hot-tack strength @80°C | 1.337 | 0.657 | 2.578 | 2.075 |
| Seal strength @70°C | 9 | 7 | 40 | 104 |
| Seal strength @75°C | 17 | 10 | 500 | 570 |
| Seal strength @80°C | 35 | 15 | 789 | 713 |

Wherein:

- The hot-tack strength at given temperature is the hot-tack strength as determined in accordance with ASTM F1921 (2012) on a seal produced at the given temperature of 60, 70 and 80°C, respectively, expressed in N/cm, on a seal of 25 mm width .

- The seal strength at given temperature is determined in accordance with ASTM F88 (2015) on a seal produced at the given temperature of 70, 75 and 80°C, respectively, expressed in g, on a seal of 25 mm width

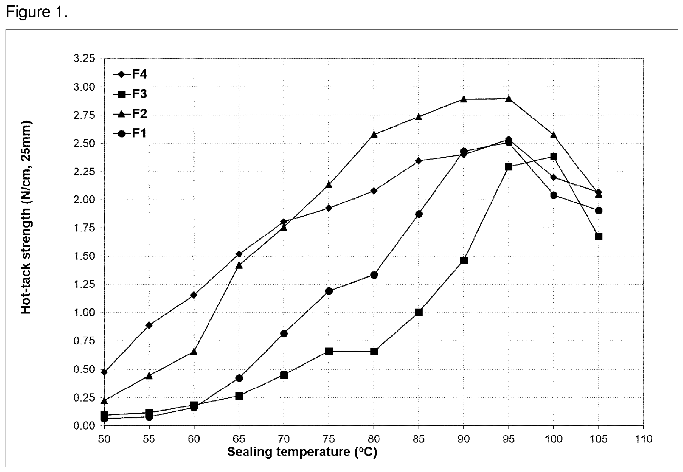

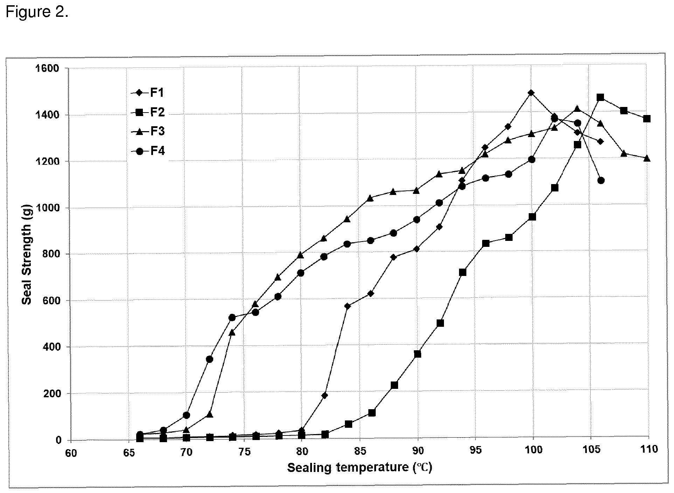

Figure 1 presents a graph showing the curves of hot-tack strength versus sealing temperature for the experimental films. Figure 2 presents a graph showing the curves of the seal strength versus sealing temperature for the experimental films.

From the above results, it can be observed that the film of the present invention, reflected by F4, allows for the production of a seal by heat-sealing having a certain strength at a particularly low sealing temperature. At temperatures of up to 70°C, the hot-tack strength of the film of the present invention outperforms the films made from material according to the prior art.

## Claims

1. Film comprising at least one sealing layer wherein at least one layer A of the sealing layer(s) comprises a polyethylene comprising moieties derived from ethylene and moieties derived from an $\alpha$-olefin comprising 4 to 10 carbon atoms, the polyethylene having a density of $\geq$ 870 and $\leq$ 920 kg/m³, preferably of $\geq$ 900 and $\leq$ 920 kg/m³, as determined in accordance with ASTM D792 (2013),

   wherein the polyethylene has:

   • a fraction of material that is eluted in analytical temperature rising elution fractionation (a-TREF) at a temperature $\leq$ 30.0°C of $\geq$ 5.0 wt%, preferably $\geq$ 10.0 wt%, or $\geq$ 7.5 wt% and $\leq$ 20.0 wt%, with regard to the total weight of the polyethylene, wherein a-TREF is measured as specified in the description;
• a shear storage modulus G' determined at a shear loss modulus G" = 5000 Pa of > 1000 Pa, G' and G" being determined in accordance with ISO 6721-10 (2015) at 190°C; and
• a chemical composition distribution broadness (CCDB) of $\geq 15.0$ and $\leq 30.0$, preferably $\geq 20.0$ and $\leq 30.0$ wherein the CCDB is determined according to formula I:

$$CCDB = \frac{T_{z+2} - T_{n-2}}{T_{n-2}} * 100$$

formula I

wherein

• $T_{n-2}$ is the moment calculated according to the formula II:

$$T_{n-2} = \frac{\sum \frac{w(i)}{T(i)^2}}{\sum \frac{w(i)}{T(i)^3}}$$

formula II

and
• $T_{z+2}$ is the moment calculated according to the formula III:

$$T_{z+2} = \frac{\sum w(i) \cdot T(i)^4}{\sum w(i) \cdot T(i)^3}$$

formula III

wherein

• $w(i)$ is the sampled weight fraction in wt% with regard to the total sample weight in a-TREF analysis of a sample (i) taken at temperature $T(i)$, where $T(i) > 30°C$, the area under the a-TREF curve being normalised to surface area = 1 for $T(i) > 30°C$; and
• $T(i)$ is the temperature at which sample (i) is taken in a-TREF analysis, in °C;

wherein the layer A comprises > 50.0 wt% of the polyethylene, with regard to the total weight of the layer A.

2. Film according to claim 1, wherein the polyethylene comprises $\geq 70.0$ wt% of moieties derived from ethylene, with regard to the total weight of the polyethylene.

3. Film according to any one of claims 1-2, wherein the polyethylene comprises $\leq 30.0$ wt% of moieties derived from an $\alpha$-olefin comprising 4 to 10 carbon atoms, with regard to the total weight of the polyethylene.

4. Film according to any one of claims 1-3, wherein the an $\alpha$-olefin comprising 4 to 10 carbon atoms is selected from 1-butene, 1-hexene, 4-methyl-1-pentene, and 1-octene, preferably from 1-hexene and 1-octene.

5. Film according to any one of claims 1-4, wherein the polyethylene is produced via a solution polymerisation process, and/or wherein the polyethylene is produced using a metallocene-type catalyst.

6. Film according to any one of claims 1-5, wherein the layer A has a thickness of 1-100 $\mu$m.

7. Film according to any one of claims 1-6, wherein the film consists of the layer A.

8. Multilayer film structure comprising a film according to any one of claims 1-7, wherein the film is positioned such in the arrangement of the multilayer film structure that at least one of the outer surfaces of the multilayer film structure is constituted by a layer A.

9. Multilayer film structure according to claim 8 comprising two outer layers and at least one inner layer positioned between the two outer layers, wherein one of the outer layers is constituted by a layer A or wherein both outer layers are each constituted by a layer A.

10. Multilayer film structure according to any one of claims 8-9, wherein the structure comprises 3-15 layers.

11. Multilayer film structure according to any one of claims 8-10, wherein the structure has a thickness of 2-150 μm.

12. Process for preparing an article comprising a sealed film, the process comprising the steps in this order of:

   • providing a film according to any one of claims 1-7 or a multilayer film structure according to any one of claims 8-11;
   • providing an object comprising a surface for sealing with a film according to any one of claims 1-7 or a multilayer film structure according to any one of claims 8-11;
   • arranging the film or multilayer film structure and the object so that a layer A of the film or the multilayer film structure and the surface for sealing of the object can be brought into contact with each other;
   • contacting the film and the surface for sealing at a temperature of $\geq 60$ and $\leq 80$ °C, during a time of 1-5 seconds, under application of a pressure of $\geq 0.3$ N/mm$^2$

   to obtain a heat-sealed article.

13. Article comprising a film sealed to a surface, wherein the article comprises a film according to any one of claims 1-7, a multilayer film structure according to any one of claim 8-11, or wherein the article is produced according to claim 12.

14. Article according to claim 13, wherein the article is a package for containing foodstuffs.

**Patentansprüche**

1. Folie, umfassend mindestens eine versiegelnde Schicht, wobei mindestens eine Schicht A der versiegelnden Schicht(en) ein Polyethylen umfasst, umfassend Einheiten, die von Ethylen abgeleitet sind, und Einheiten, die von einem α-Olefin abgeleitet sind, das 4 bis 10 Kohlenstoffatome umfasst, wobei das Polyethylen eine Dichte von $\geq$ 870 und $\leq$ 920 kg/m$^3$, vorzugsweise von $\geq$ 900 and $\leq$ 920 kg/m$^3$, wie in Übereinstimmung mit ASTM D792 (2013) bestimmt, aufweist,

   wobei das Polyethylen aufweist:

   - einen Materialanteil, der in der analytischen temperatursteigenden Elutionsfraktionierung (a-TREF) bei einer Temperatur $\leq 30,0$ °C von $\geq 5,0$ Gew.-%, vorzugsweise $\geq 10,0$ oder $\geq 7.5$ Gew.-%, und $\leq 20,0$ Gew.-%, in Bezug auf das Gesamtgewicht des Polyethylens eluiert wird, wobei a-TREF wie in der Beschreibung angegeben gemessen wird;
   - einen Scherspeichermodul G', bestimmt bei einem Scherverlustmodul G'' = 5000 Pa von > 1000 Pa, wobei G' und G'' in Übereinstimmung mit ISO 6721-10 (2015) bei 190 °C bestimmt werden;
   - eine Breite der Verteilung der chemischen Zusammensetzung (CCDB) von $\geq 15,0$ und $\leq 30,0$, vorzugsweise $\geq 20,0$ und $\leq 30,0$

   wobei die CCDB gemäß Formel I bestimmt wird:

$$CCDB = \frac{T_{z+2} - T_{n-2}}{T_{n-2}} * 100$$

   Formel I

   wobei

   - $T_{n-2}$ der gemäß der Formel II berechnete Moment ist:

$$T_{n-2} = \frac{\sum \frac{w(i)}{T(i)^2}}{\sum \frac{w(i)}{T(i)^3}}$$

Formel II

und
- $T_{Z+2}$ der gemäß der Formel III berechnete Moment ist:

$$T_{z+2} = \frac{\sum w(i) \cdot T(i)^4}{\sum w(i) \cdot T(i)^3}$$

Formel (III)

wobei

- w(i) der geprobte Gewichtsanteil in Gew.-% in Bezug auf das Gesamtprobengewicht in einer-TREF-Analyse einer Probe (i) ist, die bei der Temperatur T(i) entnommen wurde, wo T(i) > 30°C, wobei die Fläche unter der a-TREF-Kurve auf Oberflächenbereich = 1 für T(i) > 30°C normalisiert ist; und
- T(i) die Temperatur, bei der die Probe (i) bei einer a-TREF-Analyse entnommen wird, in °C ist; wobei die Schicht A > 50,0 Gew.-% des Polyethylens, in Bezug auf das Gesamtgewicht der Schicht A, umfasst.

2. Folie nach Anspruch 1, wobei das Polyethylen, in Bezug auf das Gesamtgewicht des Polyethylens, ≥ 70,0 Gew.-% an von Ethylen abgeleiteten Einheiten umfasst.

3. Folie nach einem der Ansprüche 1-2, wobei das Polyethylen, in Bezug auf das Gesamtgewicht des Polyethylens, ≤ 30,0 Gew.-% an Einheiten umfasst, die von einem $\alpha$-Olefin abgeleitet sind, das 4 bis 10 Kohlenstoffatome umfasst.

4. Folie nach einem der Ansprüche 1-3, wobei das $\alpha$-Olefin, das 4 bis 10 Kohlenstoffatome umfasst, aus 1-Buten, 1-Hexen, 4-Methyl-1-penten und 1-Octen, vorzugsweise aus 1-Hexen und 1-Octen ausgewählt ist.

5. Folie nach einem der Ansprüche 1-4, wobei das Polyethylen mittels eines Lösungspolymerisationsprozesses hergestellt wird und/oder wobei das Polyethylen unter Verwendung eines Katalysators vom Metallocentyp hergestellt wird.

6. Folie nach einem der Ansprüche 1-5, wobei die Schicht A eine Dicke von 1-100 $\mu$m aufweist.

7. Folie nach einem der Ansprüche 1-6, wobei die Folie aus der Schicht A besteht.

8. Mehrschichtige Filmstruktur, die eine Folie nach einem der Ansprüche 1-7 umfasst, wobei die Folie in der Anordnung der mehrschichtigen Filmstruktur so positioniert ist, dass mindestens eine der äußeren Oberflächen der mehrschichtigen Filmstruktur aus einer Schicht A besteht.

9. Mehrschichtige Folienstruktur nach Anspruch 8, umfassend zwei äußere Schichten und mindestens eine zwischen den zwei äußeren Schichten angeordnete innere Schicht, wobei eine der äußeren Schichten durch eine Schicht A ausgebildet ist oder wobei beide äußeren Schichten jeweils durch eine Schicht A ausgebildet sind.

10. Mehrschichtige Filmstruktur nach einem der Ansprüche 8-9, wobei die Struktur 3-15 Schichten umfasst.

11. Mehrschichtige Filmstruktur nach einem der Ansprüche 8-10, wobei die Struktur eine Dicke von 2-150 $\mu$m aufweist.

12. Prozess zum Herstellen eines Artikels, der eine versiegelte Folie umfasst, wobei der Prozess die Schritte in dieser Reihenfolge umfasst:

- Bereitstellen einer Folie nach einem der Ansprüche 1-7 oder einer mehrschichtigen Folienstruktur nach einem der Ansprüche 8-11;

- Bereitstellen eines Gegenstands, der eine Oberfläche zum Versiegeln mit einer Folie nach einem der Ansprüche 1-7 oder einer mehrschichtigen Folienstruktur nach einem der Ansprüche 8-11 umfasst;
- Anordnen der Folie oder mehrschichtigen Folienstruktur und des Gegenstands derart, dass eine Schicht A der Folie oder der mehrschichtigen Folienstruktur und die Oberfläche zum Versiegeln des Gegenstands miteinander in Kontakt gebracht werden können;
- Kontaktieren der Folie und der Oberfläche zum Versiegeln bei einer Temperatur von $\geq 60$ und $\leq 80$ °C, während einer Zeit von 1-5 Sekunden unter Anwendung eines Drucks von $\geq 0,3$ N/mm$^2$, um einen heißversiegelten Artikel zu erhalten.

13. Artikel, umfassend eine Folie, die an eine Oberfläche gesiegelt ist, wobei der Artikel eine Folie nach einem der Ansprüche 1-7, eine mehrschichtige Folienstruktur nach einem der Ansprüche 8-11 umfasst oder wobei der Artikel nach Anspruch 12 hergestellt wird.

14. Artikel nach Anspruch 13, wobei der Artikel eine Verpackung zur Aufnahme von Nahrungsmitteln ist.

## Revendications

1. Film comprenant au moins une couche d'étanchéité dans lequel au moins une couche A de la ou des couches d'étanchéité comprend un polyéthylène comprenant des fragments dérivés de l'éthylène et des fragments dérivés d'une $\alpha$-oléfine comprenant 4 à 10 atomes de carbone, le polyéthylène présentant une densité $\geq 870$ et $\leq 920$ kg/m$^3$, de préférence $\geq 900$ et $\leq 920$ kg/m$^3$, telle que déterminée conformément à la norme ASTM D792 (2013),

   dans lequel le polyéthylène présente :

   - une fraction de matière qui est éluée au cours d'un fractionnement analytique par élution à température croissante (a-TREF) à une température $\leq 30,0$ °C de $\geq 5,0$ % en poids, de préférence $\geq 10,0$ % en poids, ou $\geq 7,5$ % en poids et $\leq 20,0$ % en poids, par rapport au poids total du polyéthylène, dans lequel a-TREF est mesuré comme spécifié dans la description ;
   - un module de conservation en cisaillement G' déterminé à un module de perte en cisaillement G" = 5 000 Pa de > 1000 Pa, G' et G" étant déterminés conformément à la norme ISO 6721-10 (2015) à 190 °C ; et
   - une largeur de distribution de composition chimique (CCDB) $\geq 15,0$ et $\leq 30,0$, de préférence $\geq 20,0$ et $\leq 30,0$

   dans lequel la CCDB est déterminée selon la formule I :

   $$CCDB = \frac{T_{z+2} - T_{n-2}}{T_{n-2}} * 100$$

   formule I

   dans lequel

   - $T_{n-2}$ est le moment calculé selon la formule II :

   $$T_{n-2} = \frac{\sum \frac{w(i)}{T(i)^2}}{\sum \frac{w(i)}{T(i)^3}}$$

   formule II

   et
   - $T_{Z+2}$ est le moment calculé selon la formule III :

   $$T_{z+2} = \frac{\sum w(i) \cdot T(i)^4}{\sum w(i) \cdot T(i)^3}$$

   formule III

dans lequel

- w(i) est la fraction pondérale échantillonnée en % en poids par rapport au poids total d'échantillon dans l'analyse a-TREF d'un échantillon (i) prélevé à la température T(i), dans lequel T(i) > 30°C, la surface sous la courbe a-TREF étant normalisée en surface = 1 pour T(i) > 30 °C ; et
- T(i) est la température à laquelle l'échantillon (i) est prélevé dans une analyse a-TREF, en °C; dans lequel la couche A comprend > 50,0 % en poids du polyéthylène, par rapport au poids total de la couche A.

2. Film selon la revendication 1, dans lequel le polyéthylène comprend $\geq$ 70,0 % en poids de fragments dérivés de l'éthylène, par rapport au poids total du polyéthylène.

3. Film selon l'une quelconque des revendications 1-2, dans lequel le polyéthylène comprend $\leq$ 30,0 % en poids de fractions dérivées d'une $\alpha$-oléfine comprenant 4 à 10 atomes de carbone, par rapport au poids total du polyéthylène.

4. Film selon l'une quelconque des revendications 1-3, dans lequel l'a-oléfine comprenant 4 à 10 atomes de carbone est choisie parmi le 1-butène, le 1-hexène, le 4-méthyl-1-pentène et le 1-octène, de préférence parmi le 1-hexène et le 1-octène.

5. Film selon l'une quelconque des revendications 1-4, dans lequel le polyéthylène est produit par un processus de polymérisation en solution, et/ou dans lequel le polyéthylène est produit à l'aide d'un catalyseur de type métallocène.

6. Film selon l'une quelconque des revendications 1-5, dans lequel la couche A présente une épaisseur de 1 à 100 $\mu$m.

7. Film selon l'une quelconque des revendications 1-6, dans lequel le film consiste en la couche A.

8. Structure de film multicouche comprenant un film selon l'une quelconque des revendications 1-7, dans laquelle le film est positionné de telle sorte dans l'agencement de la structure de film multicouche qu'au moins une des surfaces extérieures de la structure de film multicouche soit constituée d'une couche A.

9. Structure de film multicouche selon la revendication 8 comprenant deux couches externes et au moins une couche interne positionnée entre les deux couches externes, dans laquelle l'une des couches externes est constituée par une couche A ou dans laquelle les deux couches externes sont chacune constituées par une couche A.

10. Structure de film multicouche selon l'une quelconque des revendications 8-9, dans laquelle la structure comprend 3 à 15 couches.

11. Structure de film multicouche selon l'une quelconque des revendications 8-10, dans laquelle la structure présente une épaisseur de 2 à 150 $\mu$m.

12. Processus de préparation d'un article comprenant un film scellé, le processus comprenant les étapes dans l'ordre suivant consistant à :

- fournir un film selon l'une quelconque des revendications 1-7 ou une structure de film multicouche selon l'une quelconque des revendications 8-11 ;
- fournir un objet comprenant une surface destinée à être scellée avec un film selon l'une quelconque des revendications 1-7 ou une structure de film multicouche selon l'une quelconque des revendications 8-11 ;
- disposer le film ou la structure de film multicouche et l'objet de telle sorte qu'une couche A du film ou de la structure de film multicouche et la surface à sceller de l'objet puissent être mises en contact l'une avec l'autre ;
- mettre en contact le film et la surface à sceller à une température $\geq$ 60 et $\leq$ 80 °C, pendant une durée de 1-5 secondes, sous application d'une pression $\geq$ 0,3 N/mm$^2$ pour obtenir un article thermoscellé.

13. Article comprenant un film scellé sur une surface, dans lequel l'article comprend un film selon l'une quelconque des revendications 1-7, une structure de film multicouche selon l'une quelconque des revendications 8-11, ou dans lequel l'article est produit selon la revendication 12.

14. Article selon la revendication 13, dans lequel l'article est un emballage destiné à contenir des denrées alimentaires.

Figure 1.

Figure 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007093603 A1
- US 5874139 A